# EUROPEAN PATENT APPLICATION

(11) **EP 4 079 793 A1**
(43) Date of publication of application: **26.10.2022**
(21) Application number: 20902237.5
(22) Date of filing: 25.11.2020
(51) Int. Cl.: C08J 3/24, C08K 5/54, C08L 23/08, C09K 3/10, F16J 15/10, C08K 3/36

(54) **RUBBER COMPOSITION AND VULCANIZED MOLDED PRODUCT**

(30) Priority: 20.12.2019 JP 2019230474
(71) Applicant: NOK Corporation, Minato-ku Tokyo 105-8585 (JP)
(72) Inventor: SUZUKI, Akihiro, Tsujido-shinmachi, Fujisawa-shi, Kanagawa 251- 0042 (JP); NOGUCHI, Makoto, Tsujido-shinmachi, Fujisawa-shi, Kanagawa 251- 0042 (JP); KOBAYASHI, Hiromichi, Tsujido-shinmachi, Fujisawa-shi, Kanagawa 251- 0042 (JP)
(74) Representative: Global IP Europe Patentanwaltskanzlei
(86) International application number: PCT/JP2020/043820
(87) International publication number: WO 2021/124816

(57) **Abstract**

The present invention relates to a rubber composition containing an ethylene-butene-diene terpolymer, silica having a CTAB specific surface area of 30 m²/g or more and 150 m²/g or less, a silane coupling agent, and a crosslinking agent, in which a content of the silica per 100 parts by weight of the ethylene-butene-diene terpolymer is 25 parts by weight or more and 90 parts by weight or less.

## Description

### Technical Field

The present invention relates to a rubber composition and a vulcanized molded article using the same.

### Background Art

Rubber materials, such as nitrile rubber (NBR), fluororubber (FKM), and acrylic rubber (ACM), have been conventionally widely used as materials of various rubber molded articles (for example, sealing parts, electrical insulators, rubber vibration insulators, soundproof rubber, and general industrial rubber), due to their properties. However, these materials have a problem that they cannot exhibit sufficient rubber characteristics in a low-temperature environment (for example, -40°C or lower), and use of a rubber material that is excellent in cold resistance has been desired.

As such a rubber material, an ethylene-propylene-diene terpolymer (also referred to as "EPDM" hereinafter) is widely known. Since EPDM is excellent in cold resistance as compared with the above rubber materials and can exhibit sufficient rubber characteristics even in a low-temperature environment, it can be utilized as a rubber material of cold-resistant sealing parts. On the other hand, in recent years, sealing parts sometimes require further cold resistance, and there remains a problem that even EPDM cannot exhibit sufficient rubber characteristics.

As a rubber material substituting for EPDM, an ethylene-butene-diene terpolymer (EBDM) has received attention. In Patent Literature 1, it is disclosed that a sealing part for high-pressure hydrogen equipment having been produced using a rubber composition containing an ethylene-butene-ethylidene norbornene terpolymer (EBENB) as an ethylene-butene-diene terpolymer, and a filler such as carbon black, silicic acid or a silicate is excellent in low-temperature sealing properties and blister resistance. In Patent Literature 2, it is disclosed that by using a rubber composition containing EBENB, carbon black, a hardness adjuster, and a crosslinking agent, a rubber molded article that has a hardness of the same level as that of a conventional rubber product using EPDM and is excellent in low-temperature sealing properties is obtained.

On the other hand, for the sealing products in recent years, not only high sealing properties in a low-temperature environment but also electrical insulating properties are required from the viewpoint of anticorrosion. Moreover, regarding EBENB, stickiness of polymer copolymer is extremely high, and it sticks to a kneading machine, particularly an open roll kneading machine surface, so that improvement in productivity in a kneading step of a rubber composition (kneading processability) is desired.

In Patent Literatures 1 and 2, it is taught that by using a rubber composition containing, for example, EBENB and carbon black, excellent low-temperature sealing properties can be imparted to a rubber molded article (sealing part), but electrical insulating properties and kneading processability are not mentioned. On that account, development of a rubber composition that can impart both of low-temperature sealing properties and electrical insulating properties to a sealing part and is excellent in kneading processability is desired. Furthermore, in a sealing product, permanent distortion (set) partially occurs with long-term use, and the sealing performance decreases, so that when a rubber composition is applied to sealing use, good compression set characteristics are also desired.

### Document List

### Patent Literatures

Patent Literature 1: International Publication No. WO 2017-170189
Patent Literature 2: International Publication No. WO 2017-170190

### Summary of Invention

### Technical Problem

It is an object of the present invention to provide a rubber composition that is excellent in kneading processability and is suitable for producing a vulcanized molded article that is good in compression set characteristics and is excellent in low-temperature characteristics and electrical insulating properties.

### Solution to Problem

A rubber composition according to an embodiment of the present invention includes an ethylene-butene-diene terpolymer, silica having a CTAB specific surface area of 30 m²/g or more and 150 m²/g or less, a silane coupling agent, and a crosslinking agent, and a content of the silica per 100 parts by weight of the ethylene-butene-diene terpolymer is 25 parts by weight or more and 90 parts by weight or less.

In one embodiment of the present invention, the ethylene-butene-diene terpolymer is an ethylene-butene-ethylidene norbornene terpolymer.

In one embodiment of the present invention, an iodine value of the ethylene-butene-diene terpolymer is 3 or more and 20 or less.

In one embodiment of the present invention, a content of the silane coupling agent per 100 parts by weight of the ethylene-butene-diene terpolymer is 0.5 parts by weight or more and 3.0 parts by weight or less.

In one embodiment of the present invention, the crosslinking agent is an organic peroxide.

A vulcanized molded article according to an embodiment of the present invention is obtained by vulcanization-molding the rubber composition.

In one embodiment of the vulcanized molded article of the present invention, a value of TR-70 as measured in accordance with JIS K6261:2006 is - 40°C or lower.

In one embodiment of the vulcanized molded article of the present invention, a volume resistivity as measured in accordance with JIS K6271-1:2015 is 1×10¹² Ω·cm or more.

In one embodiment of the vulcanized molded article of the present invention, a compression set as measured under the conditions of 130°C and 70 hours in accordance with JIS K6262:2013 is 20% or less.

In one embodiment of the present invention, the vulcanized molded article is a sealing part.

### Effects of Invention

According to the present invention, a rubber composition that is excellent in kneading processability and is suitable for producing a vulcanized molded article that is good in compression set characteristics and is excellent in low-temperature characteristics and electrical insulating properties can be provided.

### Description of Embodiments

Hereinafter, embodiments of the present invention will be described. The rubber composition according to the present embodiment contains an ethylene-butene-diene terpolymer (also referred to as "EBDM" hereinafter) as a rubber component, silica as a filler, a silane coupling agent, and a crosslinking agent. The silica to be used has a CTAB specific surface area of 30 m²/g or more and 150 m²/g or less, and in the rubber composition, the content of the silica per 100 parts by weight of the ethylene-butene-diene terpolymer is 25 parts by weight or more and 90 parts by weight or less. By compounding silica having a prescribed CTAB specific surface area in the prescribed content range in the EBDM-containing rubber composition according to the present embodiment, a rubber composition that is excellent in kneading processability and is suitable for producing a vulcanized molded article excellent in both of low-temperature characteristics and electrical insulating properties can be obtained. Moreover, by the addition of a silane coupling agent, good compression set characteristics are imparted to the resulting vulcanized molded article. Furthermore, since the vulcanized molded article exhibits excellent low-temperature characteristics, a sealing part as an example of the type of usage of such a vulcanized molded article exhibits excellent sealing performance in a low-temperature environment. Hereinafter, components that form the rubber composition according to the present embodiment will be described in detail.

### <Rubber component>

In the present embodiment, the rubber composition contains EBDM as a main component (rubber component) for a vulcanized molded article. As the ethylene-butene-diene terpolymer, for example, an ethylene-butene-ethylidene norbornene terpolymer (also referred to as "EBENB" hereinafter) is preferable. Characteristics of rubber materials such as EBENB and EPDM have a great influence on the material cost and production efficiency of the whole rubber composition (or vulcanized molded article). Moreover, since EBDM is excellent in flexibility as compared with EPDM, cold resistance (low-temperature characteristics) is excellent, processability such as kneadability, dispersibility or moldability is excellent, and the production efficiency is significantly improved, so that reduction of cost in the production process can be achieved. Thus, according to the rubber composition of the present embodiment using EBDM, particularly EBENB, low-temperature characteristics are excellent as compared with those of a conventional rubber composition using EPDM, and from the viewpoints of material cost and production efficiency, the production cost of a vulcanized molded article can be reduced.

As the EBDM, any of copolymers obtained by copolymerizing various diene components with ethylene and butene can be used. When EBENB is used as the EBDM, the EBENB is not particularly limited as long as it is a copolymer obtained by copolymerizing any of various diene components with ethylene and butene. As the EBDM, a copolymer prepared by synthesis from monomer components may be used, and various commercial products, such as "EBT K-9330M" manufactured by Mitsui Chemicals, Inc., may be used as they are.

It is preferable that the iodine value (g/100 g) of the EBDM be 3 or more and 20 or less, and it is more preferable that the iodine value be 5 or more and 18 or less. When the iodine value is in the range of 3 or more and 20 or less, excellent heat aging resistance and weathering resistance are imparted to the vulcanized molded article, and deterioration of the vulcanized molded article can be prevented. Moreover, a stable molecular state of the EBDM can be maintained even in a low-temperature environment, and the low-temperature characteristics can be improved.

A polymer viscosity of EBDM that is represented by a Mooney viscosity ML₁₊₄ (100°C) is small as compared with that of EPDM, and the EBDM is excellent also in processability (for example, kneadability, moldability). On that account, by using EBDM instead of EPDM, productivity such as molding efficiency is improved, and the production cost can be reduced. The Mooney viscosity ML₁₊₄ (100°C) of such EBDM is preferably 10 or more and 45 or less, and more preferably 15 or more and 35 or less. When the Mooney viscosity ML₁₊₄ (100°C) is 10 or more, an excessive increase of a compression set of the vulcanized molded article can be prevented, and an appropriate tensile strength can be imparted. When the Mooney viscosity ML₁₊₄ (100°C) is 45 or less, lowering of processability of the rubber composition can be prevented. The Mooney viscosity ML₁₊₄ (100°C) can be measured in accordance with the regulations of JIS K6300-1:2013.

The content of the ethylene component in the EBDM is preferably 60% by mol or more and 80% by mol or less, and more preferably 65% by mol or more and 75% by mol or less. When the content of the ethylene component is in the range of 60% by mol or more and 80% by mol or less, a glass transition temperature Tg of the EBDM shows a minimum value, and the cold resistance is improved.

In the rubber composition, EBDM that forms a rubber component may be used singly or may be used in combination of two or more. As another rubber component, an ethylene-propylene-diene terpolymer (EPDM) or the like can also be further used in combination.

### <Filler>

In the present embodiment, the rubber composition contains silica having a CTAB (cetyltrimethylammonium bromide) specific surface area of 30 m²/g or more and 150 m²/g or less. Since silica that plays a role as a filler is contained in the rubber composition, mechanical strength and compression set characteristics of the resulting vulcanized molded article can be improved while maintaining electrical insulating properties inherent in a polymer. Moreover, since the CTAB specific surface area of the silica is in the range of 30 m²/g or more and 150 m²/g or less, sticking of the rubber composition to a kneading machine, particularly a roll surface of a roll kneading machine, is inhibited in the kneading step of the rubber composition, and the kneading processability is improved. As a result, workability in the kneading step is improved, and the productivity can be enhanced. Furthermore, by using silica whose CTAB specific surface area is 150 m²/g or less, dispersibility of the silica is ameliorated, and the compression set characteristics are improved. Thus, by using silica whose CTAB specific surface area is 30 m²/g or more and 150 m²/g or less, a rubber composition that is excellent in kneading processability and further capable of producing a vulcanized molded article that is excellent in electrical insulating properties and has been improved in compression set characteristics can be provided. Particularly, it is preferable that the CTAB specific surface area of the silica be in the range of 30 m²/g or more and 100 m²/g or less, and by using the silica having such a CTAB specific surface area range, compression set characteristics are more improved.

As a commercial product of the silica, for example, "Nipsil E74P" (CTAB specific surface area: 33 m²/g) manufactured by TOSOH SILICA CORPORATION, "Carplex^{RTM} #101" (CTAB specific surface area: 50 m²/g) manufactured by Evonik Industries AG, "Ultrasil^{RTM} 360" (CTAB specific surface area: 55 m²/g) manufactured by Evonik Industries AG, "Carplex^{RTM} #1120" (CTAB specific surface area: 85 m²/g) manufactured by Evonik Industries AG, "Nipsil ER" (CTAB specific surface area: 115 m²/g) manufactured by TOSOH SILICA CORPORATION, or "Carplex^{RTM} #67" (CTAB specific surface area: 140 m²/g) manufactured by Evonik Industries AG can be used. The silica may be used singly or may be used in combination of two or more.

It is preferable that the content of the silica contained in the rubber composition be 30 parts by weight or more and 90 parts by weight or less per 100 parts by weight of EBDM, and it is more preferable that the content be 30 parts by weight or more and 70 parts by weight or less. When the content is 30 parts by weight or more and 90 parts by weight or less, the rubber composition exhibits excellent kneading processability, and excellent low-temperature characteristics are imparted to the vulcanized molded article. When the content of the silica is 30 parts by weight or more and 90 parts by weight or less per 100 parts by weight of EBDM as above, a rubber composition that is excellent in kneading processability and is capable of producing a vulcanized molded article excellent in low-temperature characteristics can be provided. Particularly, it is preferable that the content of the silica be 30 parts by weight or more and 70 parts by weight or less, and by strictly controlling the content of the silica according to the desired hardness, the compression set characteristics are more improved.

In the rubber composition, a filler other than the silica may be further compounded. When a filler other than the silica is used in combination, the type, the amount compounded, etc. of the other filler can be arbitrarily determined according to the purpose, as long as the content of the silica is in the above range. As such other fillers, carbon black, calcium carbonate, clay, talc, etc. that are common as reinforcing materials added to a rubber composition may be appropriately added so that desired physical characteristics may be obtained. When a filler showing electrical conductivity, such as carbon black, is combined for coloring, the filler is appropriately adjusted within the range in which the vulcanized molded article exhibits desired electrical insulating properties.

### <Silane coupling agent>

The rubber composition according to the present embodiment further contains a silane coupling agent. Examples of the silane coupling agents include vinyl group-containing alkoxysilanes, such as vinyltrimethoxysilane, vinyltriethoxysilane, and vinyltris(2-methoxyethoxy)silane, and amino group-containing alkoxysilanes, such as γ-aminopropyltriethoxysilane, γ-aminopropyltrimethoxysilane, N-β-aminoethyl-y-aminopropyltrimethoxysilane, and N-β-aminoethyl-γ-aminopropyltriethoxysilane. The silane coupling agents may be used singly or may be used in combination of two or more. The amount of the silane coupling agent compounded is not particularly limited, but the amount compounded is 0.5 parts by weight or more and 3.0 parts by weight or less per 100 parts by weight of EBDM, and it is preferable that the amount compounded be 0.5 parts by weight or more and 1.5 parts by weight or less. By adding the silane coupling amount in a proper amount, adhesion between the rubber and silica is enhanced, and compression set characteristics as a vulcanized molded article are improved.

### <Crosslinking agent>

In the rubber composition, a crosslinking agent to form crosslinking of EBDM is further contained. As the crosslinking agent, an organic peroxide is mainly preferred. Examples of the organic peroxides include dialkyl peroxides, peroxyketals, diacyl peroxides, and peroxyesters. Specific examples include tert-butyl peroxide, dicumyl peroxide, 2,5-dimethyl-2,5-bis(tert-butylperoxy)hexane, 2,5-dimethyl-2,5-bis(tert-butylperoxy)-3-hexyne, tert-butyl cumyl peroxide, 1,3-bis(tert-butylperoxyisopropyl)benzene, 2,5-dimethyl-2,5-di(benzoylperoxy)hexane, tert-butyl peroxybenzoate, tert-butylperoxy isopropyl carbonate, and n-butyl-4,4-bis(tert-butylperoxy)valerate. The crosslinking agents may be used singly or may be used in combination of two or more.

It is preferable that the amount of the crosslinking agent compounded be 0.5 parts by weight or more and 10 parts by weight or less per 100 parts by weight of EBDM, and it is more preferable that the amount compounded be 1 part by weight or more and 5 parts by weight or less. When the amount of the crosslinking agent compounded is in the range of 0.5 parts by weight or more and 10 parts by weight or less, the rubber composition can be prevented from foaming and thereby being incapable of being vulcanization-molded during vulcanization of EBDM, and the crosslink density becomes good, so that a vulcanized molded article showing sufficient physical characteristics is easily produced.

As such a crosslinking agent, a commercial product may be used as it is, or a masterbatch in which such an organic peroxide as above is contained may be used. The masterbatch is preferable in that kneadability and dispersibility during preparation of the rubber composition can be improved.

### <Other additives>

The rubber composition according to the present embodiment may further contain a crosslinking accelerator, as needed. As the crosslinking accelerator, triallyl isocyanurate (TAIC), triallyl cyanate (TAC), liquid polybutadiene, N,N'-m-phenylene dimaleimide, trimethylolpropane trimethacrylate, or the like can be used. The crosslinking agents may be used singly or may be used in combination of two or more. The amount of the crosslinking accelerator compounded is not particularly limited, but it is preferable that the amount compounded be 0.5 parts by weight or more and 3.0 parts by weight or less per 100 parts by weight of EBDM. Since the crosslinking accelerator is added in a proper amount, the crosslinking efficiency is improved, and further, heat resistance and mechanical characteristics are improved, so that the stability as a vulcanized molded article can also be improved.

The rubber composition according to the present embodiment may further contain a plasticizer, as needed. Examples of the plasticizers include process oils containing aliphatic hydrocarbon as a main component, such as "Diana Process Oil PW-380" manufactured by Idemitsu Kosan Co, Ltd. and "Diana Process Oil PW-220" manufactured by Idemitsu Kosan Co, Ltd. The plasticizers may be used singly or may be used in combination of two or more. Particularly, a process oil is low-molecular-weight as compared with a paraffin wax whose chemical structure is analogous thereto, so that the process oil is more preferable in that it achieves a characteristic effect that cannot be achieved when a paraffin wax is compounded. The amount of the plasticizer compounded is not particularly limited, but it is preferable that the amount compounded be 1.0 parts by weight or more and 30 parts by weight or less per 100 parts by weight of EBDM.

The rubber composition according to the present embodiment may further contain a lubricant, as needed. As the lubricant, one having a melting point at 50°C to 100°C that is in the vicinity of a surface temperature of a kneading machine, mainly a fatty acid-based lubricant, is preferred. Examples of the fatty acid-based lubricants include fatty acid amides, fatty acid zinc salts, and fatty acid esters. Examples of the fatty acid amides include saturated fatty acid amides and unsaturated fatty acid amides, and according to the structure, the fatty acid amide may be a monoamide, a substituted amide, a bisamide, or a methylolamide. Examples of the fatty acid zinc salts include saturated fatty acid zinc salts, unsaturated fatty acid zinc salts, derivatives thereof, and mixtures thereof. Examples of the fatty acid esters include lauric acid, myristic acid, palmitic acid, stearic acid, and oleic acid. In addition to the fatty acid-based lubricant, a non-zinc lubricant and an organosilicone-based lubricant can also be applied. The amount of the lubricant compounded is not particularly limited, but it is preferable that the amount compounded be 0.5 parts by weight or more and 3.0 parts by weight or less per 100 parts by weight of EBDM. Since the lubricant is added in a proper amount, kneading processability becomes better, and occurrence of bleeding of an oil, etc. can be prevented.

To the rubber composition, rubber compounding agents generally used in the rubber industry, such as an acid acceptor and an antioxidant, may be appropriately added, as needed, in addition to the above components. It is preferable that the total amount of the rubber compounding agents compounded be 300 parts by weight or less per 100 parts by weight of EBDM.

### <Production method for rubber composition>

A production method for the rubber composition according to the present embodiment is not particularly limited, but the rubber composition can be produced by appropriately compounding EBDM, silica, the silane coupling agent, and the crosslinking agent described above, and further, arbitrary various additives that are compounded as needed, in prescribed ratios, and then kneading them using a kneading machine, such as a single screw extruder, a twin-screw extruder, a roll, a Banbury mixer, a kneader, or a high shear mixer. Before the kneading, pre-kneading may be carried out, as needed.

### <Vulcanized molded article>

By vulcanization-molding the rubber composition according to the present embodiment, a vulcanized molded article can be produced. Vulcanization molding of the rubber composition is generally carried out by pressure vulcanization at about 150 to 230°C for about 0.5 to 30 minutes using an injection molding machine, a compression molding machine, or the like. After such primary vulcanization (pressure vulcanization) is carried out, secondary vulcanization may be carried out, as needed, in order to surely provide vulcanization to the inside of the vulcanized molded article. The secondary vulcanization can be generally carried out by oven heating at about 150 to 250°C for about 0.5 to 24 hours.

The vulcanized molded article obtained by vulcanization-molding the rubber composition according to the present embodiment particularly exhibits excellent low-temperature characteristics even at -40°C or lower, and is suitable for use in a low-temperature environment (for example, -40°C to -60°C). It is preferable that as such low-temperature characteristics of the vulcanized molded article, for example, a value of TR-70 as measured in accordance with JIS K6261:2006 be -40°C or lower.

Moreover, the vulcanized molded article obtained by vulcanization-molding the rubber composition according to the present embodiment exhibits excellent electrical insulating properties. It is preferable that as such electrical insulating properties of the vulcanized molded article, for example, a volume resistivity as measured in accordance with JIS K6271-1:2015 be 1×10¹² Ω·cm or more.

Furthermore, it is preferable that the vulcanized molded article obtained by vulcanization-molding the rubber composition according to the present embodiment be good in compression set characteristics. It is preferable that as such compression set characteristics of the vulcanized molded article, for example, a compression set as measured under the conditions of 130°C and 70 hours in accordance with JIS K6262:2013 be 20% or less, and it is more preferable that the compression set be 15% or less.

The vulcanized molded article according to the present embodiment exhibits good compression set characteristics, and further, it is excellent in low-temperature characteristics and electrical insulating properties, so that it is suitable for use as, for example, a sealing part or an insulator. Particularly when the vulcanized molded article is a sealing part, such a sealing part exhibits excellent sealing performance in a low-temperature environment. Above all, as a sealing part for which sealing properties in a low-temperature environment and electrical insulating properties are required, the vulcanized molded article is suitable for use as a gasket for electromobility (e-Mobility).

The shape of the vulcanized molded article is not particularly limited, and the vulcanized molded article can be made in various shapes according to the use application. For example, when the vulcanized molded article is used as a sealing part, examples of the shapes of the sealing part include shapes of an O-ring, a gasket, a packing, and a sheet. The use application of the vulcanized molded article is not limited to the above sealing part, and the vulcanized molded article is preferred also as any of other industrial sealing parts such as insulation seals and seals for a cold district.

Hereinbefore, the embodiments of the present invention have been described, but the present invention is not limited to the above embodiments and includes all embodiments that are within the concept of the present invention and the scope of the claims, and various changes can be carried out within the scope of the present invention.

### Examples

Hereinafter, examples of the present invention will be described, but the present invention is not limited to these examples as long as they do not depart from the spirit of the present invention.

### (Example 1)

In an open roll kneading machine, 100 parts by weight of EBDM (iodine value: 16 (g/100), trade name "EBT K-9330M", manufactured by Mitsui Chemicals, Inc.), 30 parts by weight of silica A (trade name "Nipsil E74P", manufactured by TOSOH SILICA CORPORATION), 1 part by weight of a silane coupling agent (trade name "A171", manufactured by Momentive Performance Materials Inc.), 3 parts by weight of a crosslinking agent (trade name "Percumyl D", manufactured by Nippon Oil & Fats Co., Ltd.), and 1 part by weight of a lubricant (trade name "Diamide O-200T", manufactured by Nihon Kasei CO., LTD.) were kneaded, thereby preparing a rubber composition.

### <Kneading processability>

Regarding the resulting rubber composition, kneading processability was evaluated based on stickiness to the kneading machine surface. When stable kneading was possible, the kneading processability was evaluated as good (indicated by circle symbol (o)), and when stickiness of the rubber composition to the kneading machine surface was strong and continuation of kneading was impossible, the kneading processability was evaluated as poor (indicated by cross symbol (x)). The result is set forth in Table 1.

### <Low-temperature characteristics>

Regarding the resulting rubber composition, pressure vulcanization (primary vulcanization) at 180°C for 10 minutes and open vulcanization (secondary vulcanization) at 150°C for 24 hours were carried out using a sheet mold, thereby preparing a sheet-like vulcanized molded article 2 mm in thickness as a test piece. Regarding the test piece of the resulting vulcanized molded article, a temperature as TR-70 was measured in accordance with JIS K6261:2006. TR-70 is a temperature at which a shrinkage factor becomes 70% when, after the test piece is extended by 50% and then frozen, this is heated to recover elastic modulus. As the temperature measured as TR-70 decreases, the rubber elasticity is recovered at a lower temperature, and this indicates that such a test piece is excellent in low-temperature characteristics. In a sealing part to which sealing properties are imparted by rubber elasticity, it is desirable that the temperature be lower. It can be seen that such material characteristics show favorable sealing behavior from the viewpoint of rubber elasticity. When TR-70 was -40°C or lower, the low-temperature characteristics were evaluated as good (indicated by circle symbol (o)), and when it exceeded -40°C, the low-temperature characteristics were evaluated as poor (indicated by cross symbol (x)). The result is set forth in Table 1.

### <Electrical insulating properties>

Regarding the test piece of the resulting vulcanized molded article, a volume resistivity was measured one minute after application of 500 V between electrodes in accordance with JIS K6271-1:2015. The higher volume resistivity is, the more excellent electrical insulating properties are. When the volume resistivity was 1×10¹² Ω·cm or more, the electrical insulating properties were evaluated as good (indicated by circle symbol (o)), and when it was less than 1×10¹² Ω·cm, the electrical insulating properties were evaluated as poor (indicated by cross symbol (x)). The result is set forth in Table 1.

### <Compression set characteristics>

Three test pieces of the resulting vulcanized molded article were laminated, and a compression set after the elapse of 70 hours at 130°C in air was measured in accordance with JIS K6262:2013. The lower compression set is, the more excellent compression set characteristics are. When the compression set characteristics were 15% or less, the compression set characteristics were evaluated as good (indicated by circle symbol (o)), when they were 20% or less, the compression set characteristics were evaluated as fair (indicated by triangle symbol (Δ)), and when they exceeded 20%, the compression set characteristics were evaluated as poor (indicated by cross symbol (x)). The "fair (Δ)" or better was evaluated as having reached passing level. The result is set forth in Table 1.

### (Example 2)

A rubber composition and its vulcanized molded article were prepared in the same manner as in Example 1, except that the amount of the silica A compounded was set to 60 parts by weight, and the above measurement and evaluation were carried out. The results are set forth in Table 1.

### (Example 3)

A rubber composition and its vulcanized molded article were prepared in the same manner as in Example 1, except that the amount of the silica A compounded was set to 90 parts by weight, and the above measurement and evaluation were carried out. The results are set forth in Table 1.

### (Example 4)

A rubber composition and its vulcanized molded article were prepared in the same manner as in Example 1, except that silica B (trade name: "Carplex^{RTM} #101", manufactured by Evonik Industries AG) was used instead of the silica A, and the above measurement and evaluation were carried out. The results are set forth in Table 1.

### (Example 5)

A rubber composition and its vulcanized molded article were prepared in the same manner as in Example 1, except that silica C (trade name: "Ultrasil^{RTM} 360", manufactured by Evonik Industries AG) was used instead of the silica A, and the above measurement and evaluation were carried out. The results are set forth in Table 1.

### (Example 6)

A rubber composition and its vulcanized molded article were prepared in the same manner as in Example 1, except that silica D (trade name: "Carplex^{RTM} #1120", manufactured by Evonik Industries AG) was used instead of the silica A, and the above measurement and evaluation were carried out. The results are set forth in Table 1.

### (Example 7)

A rubber composition and its vulcanized molded article were prepared in the same manner as in Example 1, except that silica E (trade name: "Nipsil ER", manufactured by TOSOH SILICA CORPORATION) was used instead of the silica A, and the above measurement and evaluation were carried out. The results are set forth in Table 1.

### (Example 8)

A rubber composition and its vulcanized molded article were prepared in the same manner as in Example 1, except that silica F (trade name: "Carplex^{RTM} #67", manufactured by Evonik Industries AG) was used instead of the silica A, and the above measurement and evaluation were carried out. The results are set forth in Table 1.

### (Comparative Example 1)

A rubber composition and its vulcanized molded article were prepared in the same manner as in Example 1, except that the amount of the silica A compounded was set to 20 parts by weight, and the above measurement and evaluation were carried out. The results are set forth in Table 1.

### (Comparative Example 2)

A rubber composition and its vulcanized molded article were prepared in the same manner as in Example 1, except that the amount of the silica A compounded was set to 100 parts by weight, and the above measurement and evaluation were carried out. The results are set forth in Table 1.

### (Comparative Example 3)

A rubber composition and its vulcanized molded article were prepared in the same manner as in Example 1, except that 30 parts by weight of silica G (trade name: "Nipsil LP", manufactured by Evonik Industries AG) was compounded instead of the silica A, and the above measurement and evaluation were carried out. The results are set forth in Table 1.

### (Comparative Example 4)

A rubber composition and its vulcanized molded article were prepared in the same manner as in Example 1, except that 20 parts by weight of silica H (trade name: "Ultrasil^{RTM} 9500GR", manufactured by Evonik Industries AG) was compounded instead of the silica A, and the above measurement and evaluation were carried out. The results are set forth in Table 1.

### (Comparative Example 5)

A rubber composition and its vulcanized molded article were prepared in the same manner as in Example 1, except that 80 parts by weight of carbon black (ISAF (Intermediate Super Abrasion Furnace) carbon black, trade name "SHOWBLACK N220", manufactured by Cabot Japan K.K.) was compounded instead of the silica A, and the silane coupling agent was not contained, and the above measurement and evaluation were carried out. The results are set forth in Table 1.

### (Comparative Example 6)

A rubber composition and its vulcanized molded article were prepared in the same manner as in Example 1, except that the silane coupling agent was not contained, and the above measurement and evaluation were carried out. The results are set forth in Table 1.

### (Comparative Example 7)

A rubber composition and its vulcanized molded article were prepared in the same manner as in Example 1, except that EPDM (trade name: "EP33", manufactured by JSR Corporation) was compounded instead of the EBDM, and the above measurement and evaluation were carried out. The results are set forth in Table 1.

**[Table 1]**

| | | Exemple 1 | Exemple 2 | Exemple 3 | Exemple 4 | Exemple 5 | Exemple 6 | Exemple 7 | Exemple 8 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|
| | EBDM | 100 | 100 | 100 | 100 | 100 | 100 | 100 | 100 | 100 | 100 | 100 | 100 | 100 | 100 | |
| | EPDM | | | | | | | | | | | | | | | 100 |
| | Silane coupling agent | 1 | 1 | 1 | 1 | 1 | 1 | 1 | 1 | 1 | 1 | 1 | 1 | | | 1 |
| | Crosslinking agent | 3 | 3 | 3 | 3 | 3 | 3 | 3 | 3 | 3 | 3 | 3 | 3 | 3 | 3 | 3 |
| | Lubricant | 1 | 1 | 1 | 1 | 1 | 1 | 1 | 1 | 1 | 1 | 1 | 1 | 1 | 1 | 1 |
| | Silica A (CTAB specific surface area:33m²/g) | 30 | 60 | 90 | | | | | | 20 | 100 | | | | 30 | 30 |
| Rubber composition | Silica B (CTAB specific surface area:50m²/g) | | | | 30 | | | | | | | | | | | |
| | Silica C (CTAB specific surface area.55m²/g) | | | | | 30 | | | | | | | | | | |
| | Silica D (CTAB specific surface area 85m²/g) | | | | | | 30 | | | | | | | | | |
| | Silica E (CTAB specific surface area:115m²/g) | | | | | | | 30 | | | | | | | | |
| | Silica F (CTAB specific surface area:140m²/g) | | | | | | | | 30 | | | | | | | |
| | Silica G (CTAB specific surface area:154m²/g) | | | | | | | | | | | 30 | | | | |
| | Silica H (CTAB specific surface area:220m²/g) | | | | | | | | | | | | 30 | | | |
| | Caroon black | | | | | | | | | | | | | 80 | | |
| Kneading processability | Sticking to roll | ∘ | ∘ | ∘ | ∘ | ∘ | ∘ | ∘ | ∘ | × | ∘ | × | × | ∘ | ∘ | ∘ |
| Low-temperature characteristics | TR-70 (°C) | ∘ (-45) | ∘ (-43) | ∘ (-40) | ∘ (-45) | ∘ (-45) | ∘ (-44) | ∘ (-44) | ∘ (-43) | ∘ (-46) | × (-39) | ∘ (-43) | ∘ (-42) | × (-32) | ∘ (-43) | × (-28) |
| Electrical insulating properties | Volume resistivity (Ω·cm) | ∘ (1.5×10¹⁵) | ∘ (1.3×10¹⁵) | ∘ (1.1×10¹⁵) | ∘ (1.6×10¹⁵) | ∘ (8.8×10¹⁴) | ∘ (9.1×10¹⁴) | ∘ (3.4×10¹⁴) | ∘ (2.1×10¹⁴) | ∘ (1.5×10¹⁵) | ∘ (1.1×10¹⁵) | ∘ (3.5×10¹⁴) | ∘ (5.3×10¹⁴) | × (3.3×10⁶) | ∘ (1.3×10¹⁵) | ∘ (1.5×10¹⁵) |
| Compression set characteristics | Compression set | ∘ | ∘ | △ | ∘ | ∘ | ∘ | △ | △ | ∘ | △ | × | × | × | × | ∘ |

The components shown in the above Table 1 are as follows.
- EBDM: ethylene-butene-diene terpolymer (iodine value: 16 (g/100), trade name "EBT K-9330M", manufactured by Mitsui Chemicals, Inc.
- EPDM: ethylene-propylene-diene terpolymer (trade name "EP33", manufacture by JSR Corporation
- Silica A: trade name "Nipsil E74P", manufactured by TOSOH SILICA CORPORATION (CTAB specific surface area: 33 m²/g)
- Silica B: trade name "Carplex^{RTM} #101", manufactured by Evonik Industries AG (CTAB specific surface area: 50 m²/g)
- Silica C: trade name "Ultrasil^{RTM} 360", manufactured by Evonik Industries AG (CTAB specific surface area: 55 m²/g)
- Silica D: trade name "Carplex^{RTM} #1120", manufactured by Evonik Industries AG (CTAB specific surface area: 85 m²/g)
- Silica E: trade name "Nipsil ER", manufactured by TOSOH SILICA CORPORATION (CTAB specific surface area: 115 m²/g)
- Silica F: trade name "Carplex^{RTM} #67", manufactured by Evonik Industries AG (CTAB specific surface area: 140 m²/g)
- Silica G: trade name "Nipsil LP", manufactured by TOSOH SILICA CORPORATION (CTAB specific surface area: 154 m²/g)
- Silica H trade name "Ultrasil^{RTM} 9500GR", manufactured by Evonik Industries AG (CTAB specific surface area: 220 m²/g)
- Silane coupling agent: trade name "A171", manufactured by Momentive Performance Materials Inc.
- Crosslinking agent: trade name "Percumyl D", manufactured by Nippon Oil & Fats Co., Ltd.
- Lubricant: trade name "Diamide O-200T", manufactured by Nihon Kasei CO., LTD.
- Carbon black: ISAF (Intermediate Super Abrasion Furnace) carbon black (trade name "SHOWBLACK N220", manufactured by Cabot Japan K.K.)

The values of the above components in the above Table 1 are expressed in "part(s) by weight".

As can be seen from Table 1, in Examples 1 to 8 in each of which in a rubber composition containing EBDM, silica having a CTAB specific surface area of 30 m²/g or more and 150 m²/g or less was compounded in an amount of 25 parts by weight or more and 90 parts by weight or less per 100 parts by weight of EBDM, and a silane coupling agent was compounded, the rubber composition did not stick to the kneading machine surface, stable kneading was possible, and the rubber composition was excellent in kneading processability. In the vulcanized molded articles prepared using the rubber compositions of Examples 1 to 8, TR-70 was -40°C or lower, and the volume resistivity was 1×10¹² Ω·cm or more, so that they were excellent also in low-temperature characteristics and electrical insulating properties. Moreover, in the vulcanized molded articles prepared using the rubber compositions of Examples 1 to 8, the compression set was 20% or less, so that they exhibited good compression set characteristics, and particularly in Examples 1, 2 and 4 to 6, the vulcanized molded articles exhibited excellent compression set characteristics.

On the other hand, in Comparative Example 1 in which the content of silica having a CTAB specific surface area of 30 m²/g or more and 150 m²/g or less was less than 30 parts by weight per 100 parts by weight of EBDM, the rubber composition stuck to the kneading machine surface, continuation of kneading was impossible, and the rubber composition was poor in kneading processability.

In Comparative Example 2 in which the content of silica having a CTAB specific surface area of 30 m²/g or more and 150 m²/g or less exceeded 90 parts by weight per 100 parts by weight of EBDM, TR-70 shown by the vulcanized molded article prepared using the rubber composition exceeded - 40°C, and the vulcanized molded article was poor in low-temperature characteristics.

In Comparative Examples 3 and 4 in which silica whose CTAB specific surface area exceeded 150 m²/g was used, the rubber composition stuck to the kneading machine surface, continuation of kneading was impossible, and the rubber composition was poor in kneading processability. Moreover, the compression set exceeded 20%, and the vulcanized molded article was poor also in compression set characteristics.

In Comparative Example 5 in which carbon black was used instead of silica having a CTAB specific surface area of 30 m²/g or more and 150 m²/g or less, TR-70 shown by the vulcanized molded article prepared using the rubber composition exceeded -40°C, and the volume resistivity was less than 1×10¹² Ω·cm, so that excellent low-temperature characteristics and electrical insulating properties could not be imparted to the vulcanized molded article. Moreover, since the silane coupling agent was not used, the compression set exceeded 20%, and the vulcanized molded article was poor also in compression set characteristics.

In Comparative Example 6 in which a silane coupling agent was not used, the compression set shown by the vulcanized molded article prepared using the rubber composition exceeded 20%, and good compression set characteristics could not be imparted to the vulcanized molded article.

In Comparative Example 7 in which as a rubber component, EPDM was used instead of EBDM, TR-70 shown by the vulcanized molded article prepared using the rubber composition exceeded -40°C, and excellent low-temperature characteristics could not be imparted to the vulcanized molded article.

From the above results, it can be seen that by compounding, in a rubber composition containing EBDM, silica having a specific surface area of 30 m²/g or more and 150 m²/g or less in an amount of 25 parts by weight or more and 90 parts by weight or less per 100 parts by weight of EBDM, a rubber composition that is excellent in kneading processability and is suitable for producing a vulcanized molded article that is good in compression set characteristics and is excellent in low-temperature characteristics and electrical insulating properties can be provided. On that account, when the vulcanized molded article is, for example, a sealing part, such a sealing part can exhibit excellent sealing performance in a low-temperature environment, and is suitable for use particularly as a gasket for e-Mobility.

## Claims

1. A rubber composition **characterized in that**:
the rubber composition comprises an ethylene-butene-diene terpolymer, silica having a CTAB specific surface area of 30 m²/g or more and 150 m²/g or less, a silane coupling agent, and a crosslinking agent; and
a content of the silica per 100 parts by weight of the ethylene-butene-diene terpolymer is 25 parts by weight or more and 90 parts by weight or less.

2. The rubber composition according to claim 1, wherein the ethylene-butene-diene terpolymer is an ethylene-butene-ethylidene norbornene terpolymer.

3. The rubber composition according to claim 1 or 2, wherein an iodine value of the ethylene-butene-diene terpolymer is 3 or more and 20 or less.

4. The rubber composition according to any one of claims 1 to 3, wherein a content of the silane coupling agent per 100 parts by weight of the ethylene-butene-diene terpolymer is 0.5 parts by weight or more and 3.0 parts by weight or less.

5. The rubber composition according to any one of claims 1 to 4, wherein the crosslinking agent is an organic peroxide.

6. A vulcanized molded article obtained by vulcanization-molding the rubber composition according to any one of claims 1 to 5.

7. The vulcanized molded article according to claim 6, wherein a value of TR-70 as measured in accordance with JIS K6261:2006 is -40°C or lower.

8. The vulcanized molded article according to claim 6 or 7, wherein a volume resistivity as measured in accordance with JIS K6271-1:2015 is 1×10¹² Ω·cm or more.

9. The vulcanized molded article according to any one of claims 6 to 8, wherein a compression set as measured under the conditions of 130°C and 70 hours in accordance with JIS K6262:2013 is 20% or less.

10. The vulcanized molded article according to any one of claims 6 to 9, being a sealing part.
